# EUROPÄISCHE PATENTSCHRIFT

(11) **EP 2 417 475 B1**
(45) Veröffentlichungstag und Bekanntmachung des Hinweises auf die Patenterteilung: **21.08.2013**
(21) Anmeldenummer: 10726875.7
(22) Anmeldetag: 01.04.2010
(51) Int. Cl.: G01S 7/292, G01S 13/92, G01S 13/93

(54) **RADARSYSTEM MIT ANORDNUNGEN UND VERFAHREN ZUR ENTKOPPLUNG VON SENDE- UND EMPFANGSSIGNALEN SOWIE UNTERDRÜCKUNG VON STÖREINSTRAHLUNGEN**
RADAR SYSTEM HAVING ARRANGEMENTS AND METHOD FOR DECOUPLING TRANSMISSION AND RECEPTION SIGNALS AND SUPPRESSION OF INTERFERENCE RADIATION
SYSTÈME RADAR DOTÉ D'AGENCEMENTS ET PROCÉDÉ POUR DÉCOUPLER DES SIGNAUX D'ÉMISSION ET DE RÉCEPTION AINSI QUE POUR ANNULER DES RAYONNEMENTS PARASITES

(30) Priorität: 06.04.2009 DE 102009016478
(43) Veröffentlichungstag der Anmeldung: 15.02.2012
(60) Teilanmeldung: 13167875.7
(73) Patentinhaber: Conti Temic microelectronic GmbH, 90411 Nürnberg (DE)
(72) Erfinder: WINTERMANTEL, Markus, 88131 Lindau (DE)
(86) Internationale Anmeldenummer: PCT/DE2010/000417
(87) Internationale Veröffentlichungsnummer: WO 2010/115418

(56) Entgegenhaltungen:
- WO-A1-2008/040341
- DE-A1- 19 546 653
- DE-A1-102007 008 944
- US-A1- 2003 179 131

## Beschreibung

Die Erfindung bezieht sich auf ein Radarsystem zum Einsatz für Fahrerassistenzsysteme im Kraftfahrzeug. Das Radarsystem besitzt erfindungsgemäß Anordnungen und Verfahren zur Entkopplung von Sende- und Empfangssignalen sowie Unterdrückung von Störeinstrahlungen.

### Stand der Technik

Kraftfahrzeuge werden zunehmend mit Fahrerassistenzsystemen ausgerüstet, welche mit Hilfe von Sensorsystemen die Umgebung erfassen und aus der so erkannten Verkehrssituation automatische Reaktionen des Fahrzeugs ableiten und/oder den Fahrer instruieren, insbesondere warnen. Dabei unterscheidet man zwischen Komfort- und Sicherheitsfunktionen.

Als Komfortfunktion spielt in der momentanen Entwicklung FSRA (Full Speed Range Adaptive Cruise Control) die wichtigste Rolle. Das Fahrzeug regelt die Eigengeschwindigkeit auf die vom Fahrer vorgegebene Wunschgeschwindigkeit ein, sofern die Verkehrssituation dies zulässt, andernfalls wird die Eigengeschwindigkeit automatisch an die Verkehrssituation angepasst.

Neben einer Erhöhung des Komforts werden zukünftig Sicherheitsfunktionen eine immer größere Rolle spielen, wobei die Reduzierung des Bremsweges in Notsituationen die wichtigste Rolle spielen dürfte. Das Spektrum der entsprechenden Fahrerassistenzfunktionen reicht von einem automatischen Vorfüllen der Bremse zur Reduktion der Bremslatenz (Prefill), über einen verbesserten Bremsassistenten (BAS+) bis hin zur autonomen Notbremsung.

Für Fahrerassistenzsysteme der oben beschriebenen Art werden heute vorwiegend Radarsensoren eingesetzt. Diese arbeiten auch bei schlechten Wetterbedingungen zuverlässig und können neben dem Abstand von Objekten auch direkt deren Relativgeschwindigkeit über den Dopplereffekt messen.

Diese Radarsensoren sind heute aber noch recht teuer und ihrer Detektionsqualität nicht perfekt, was insbesondere für Sicherheitsfunktionen sehr kritisch ist; als Gründe dafür seien exemplarisch genannt:
- Für eine genau Bestimmung der lateralen Position von Objekten sind Strahlungskeulen in vielen unterschiedlichen Richtungen nötig; dies wird in zunehmendem Maße durch mehrere in einem Sensor integrierte Sende- und bzw. oder Empfangsantennen vorzugsweise in planarer Ausführung realisiert, welche parallel oder quasi-parallel betrieben werden. Damit sich die Antennen nicht gegenseitig beeinflussen, müssen sie sehr gut entkoppelt bzw. isoliert sein, was bisher auch durch kostspielige Schaltungstechnik nicht zufriedenstellend erreicht werden kann.
   Als Beispiel seien 24GHz-UWB-Sensoren genannt (UWB = Ultra Wide Band); auf Grund der sehr restriktiven Frequenzzulassung darf nur sehr wenig Sendeleistung abgestrahlt werden, was dazu führt, dass die über die eigentlichen Empfangsantennen durch unzureichende Isolation ungewollt abgestrahlte Leistung ähnlich groß ist wie die über die Sendeantennen abgestrahlte Leistung, was zu Problemen bei der Azimutwinkelschätzung von Objekten und zu Empfindlichkeitsverlusten in einzelnen Winkelbereichen führen kann.
- Bei Verwendung mehrerer Antennen werden mehrere parallele Empfangspfade implementiert, was zu hohen Kosten für die analoge und digitale Signalverarbeitung führt.
- Durch andere Systeme bewirkte Störeinkopplungen bzw. -einstrahlungen im Radarfrequenzbereich oder im Bereich, in welchem der niederfrequente Teil der Auswerteelektronik arbeit, können zu fehlerhaften Detektionen und damit zu Fehlreaktionen führen.

Ein Verfahren und eine Vorrichtung für ein frequenzmoduliertes Radarsystem zur Kompensation von Störeinstrahlungen wird in der Schrift WO2008/040341 angegeben. Es wird vorgeschlagen für eine Kompensation eine der folgenden Größen zu variieren a) zeitlicher Abstand zwischen gesendeten Frequenzrampen, b) Zeitraum vom Start der Senderampe bis zum Beginn der Abtastung des Empfangssignals, c) Frequenz beim Start der gedendeten Frequenzrampe, d)Vorzechen der Steigung der Frequenzrampen.

Die Schrift DE19546653A1 offenbart ein Verfahrenzur Verminderung von Störeinflüssen in Puls-Doppler-Rardargeräten durch andere gleichartige Puls-Doppler-Radargeräte. Dazu werden von Sendemitteln Bursts ausgesendet, die sich aus Sendeimpulsen zusammensetzen, die nach einem vorgegebenen Code von Sendepuls zu Sendepuls unterschiedliche Phasensprünge aufweisen. Im Empfangszweig werden die Phasensprünge der empfangenen Echos nach dem vorgegebenen Code decodiert, d.h. kompensiert oder bei der Auswertung berücksichtigt oder herausgerechnet.

### Aufgabe, Lösung und Vorteile der Erfindung

Aufgabe der Erfindung ist es, ein Radarsystem und ein Verfahren für ein Kraftfahrzeug anzugeben das die Auswirkung von Störstrahlung unterdrückt.

Diese Aufgabe wird grundsätzlich mit Hilfe eines Radarsystems gemäß den Ansprüchen 1-14 gelöst.

Insbesondere ist mit der Unterdrückung von Störstrahlung die Entkopplung bzw. Isolation von Sende- und Empfangssignalen gemeint, was zu einer genauen Bestimmung der lateralen Lage von Objekten und zur Vermeidung von Empfindlichkeitsverlusten führt. Weiterhin ist die Unterdrückung von Störeinstrahlungen umfasst.

Die Vorteile der Erfindung ergeben sich aus reduzierten Anforderungen insbesondere an die Komponenten der Hochfrequenzelektronik und der analoge und digitale Signalverarbeitung, woraus sich für das Radarsystem reduzierte Kosten ergeben, sowie aus einer verbesserten und robusten Detektionsqualität.

### Kurzbeschreibung der Zeichnungen

In Fig. 1 ist die erste Ausführungsform eines Radarsystems dargestellt.
Fig. 2 zeigt die Frequenz der Sende- und der Empfangssignale, welche aus sogenannten Frequenzrampen besteht.
Fig. 3 zeigt ein abgetastetes Signal bei Anwesenheit von zwei Objekten vor der ersten DFT (links) und nach der ersten DFT (rechts).
In Fig.4 ist der über die Frequenzrampen rotierende komplexe Spektralwert im Entfemungstor 4, in welchem sich genau ein Objekt befindet, dargestellt.
Fig. 5 zeigt das zweidimensionale komplexwertige Spektrum nach der zweiten DFT.
Fig. 6 erläutert die unterschiedlichen Phasenlagen an den vier Empfangsantennen und ihren Zusammenhang mit dem Azimutwinkel.
Fig. 7 zeigt die Daten vor der dreidimensionalen DFT (links) und das dreidimensionale komplexwertige Spektrum danach (rechts).
Fig. 8 zeigt für eine starke 500kHz-Einkopplung das Dopplerspektrum eines Empfangskanals im betroffenen Entfernungstor sechs mit und ohne zufällige Invertierung.
In Fig. 9 ist das Sendeantennendiagramm mit und ohne die ungewollt über die Empfangsantennen abgestrahlte Leistung dargestellt.
In Fig. 10 ist die zweite Ausführungsform eines Radarsystems dargestellt.
Fig. 11 zeigt die dritte Ausführungsform eines Radarsystems.
Fig. 12 zeigt die vierte Ausführungsform eines Radarsystems.

### Ausführungsbeispiele

Die Erfindung wird nun anhand beispielhafter Ausführungen von Radarsystemen erläutert. Die in den Ausführungen beschriebene Erfindung und die angegebenen Zahlenbeispiele beziehen sich auf ein 24 GHz Radar. Dies soll jedoch die Erfindung, nicht auf den 24 GHz Bereich beschränken, sondern die Erfindung wird für hochfrequenten Radarsysteme beansprucht und kann von einem Fachmann ohne weitere auch bei anderen Frequenzen z. B. 77 GHz ausgeführt werden.

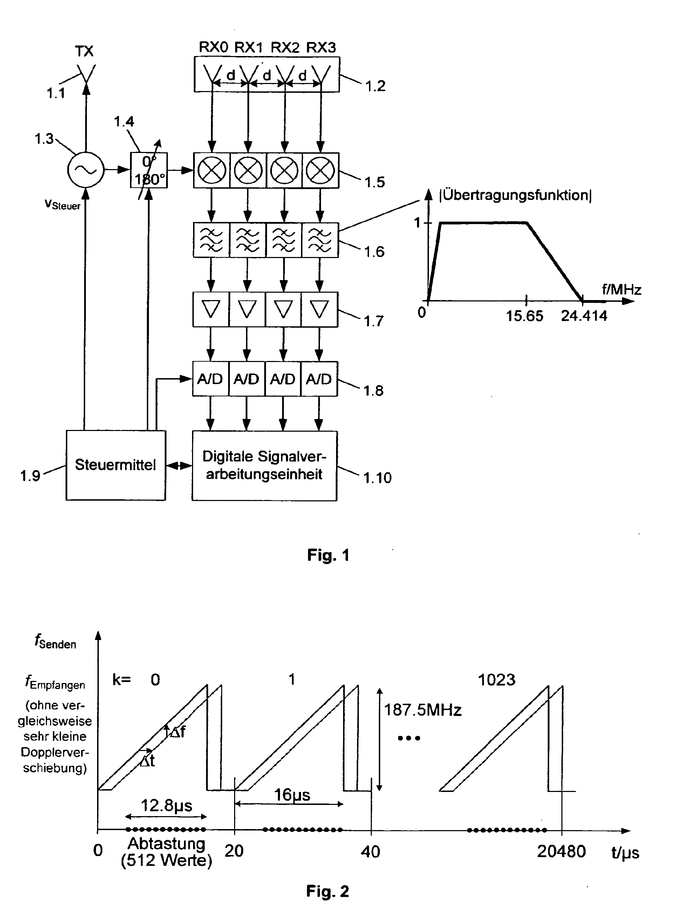

### Ausführung 1 nach Fig. 1

Zuerst wird die beispielhafte Ausführung eines Radarsystems, welches in Fig. 1 grob dargestellt ist, betrachtet. Das Radarsystem besitzt eine Sendeantenne 1.1 zur Abstrahlung von Sendesignalen und eine Mehrzahl insbesondere von Empfangsantennen 1.2 zum gleichzeitigen Empfang von an Objekten reflektierten Sendesignalen.

Im Folgenden wird ein Ausführungsbeispiel mit 4 Empfangsantennen gegeben, das ohne weiteres mit einer beliebigen Mehrzahl von Empfangsantennen und zumindest einer Empfangsantenne ausführbar ist.

Alle Antennen (Sende- und Empfangsantennen) haben in Elevation und Azimut dieselbe Strahlform. Die vier Empfangsantennen befinden sich in einer Ebene und haben jeweils gleichen lateralen, d. h. horizontalen Abstand d.

Die Sendesignale werden aus dem Hochfrequenz-Oszillator 1.3 im 24GHz-Bereich gewonnen, welcher über eine Steuerspannung V_{Steuer} in seiner Frequenz verändert werden kann; die Steuerspannung wird in den Steuermitteln 1.9 erzeugt. Die von den Antennen empfangenen Signale werden in den reellwertigen Mischern 1.5 ebenfalls mit dem Signal des Oszillators 1.3 in den Niederfrequenzbereich heruntergemischt; die Phase des Oszillatorsignals kann dazu noch über den schaltbaren Invertierer 1.4 um 180° gedreht oder unverändert gelassen werden (die Ansteuerung des schaltbaren Invertierers erfolgt aus den Steuermitteln 1.9). Danach durchlaufen die Empfangssignale jeweils ein Bandpassfilter 1.6 mit der dargestellten Übertragungsfunktion, einen Verstärker 1.7 und einen A/D-Wandler 1.8; anschließend werden sie in einer digitalen Signalverarbeitungseinheit 1.10 weiterverarbeitet.

Damit die Entfernung von Objekten gemessen werden kann, wird - wie in Fig. 2 dargestellt - die Frequenz des Hochfrequenz-Oszillators und damit der Sendesignale sehr schnell linear verändert (z. B. in 16µs um 187.5MHz); man spricht dabei von einer Frequenzrampe. Die Frequenzrampen werden periodisch wiederholt (z.B. alle 20µs); insgesamt gibt es also in diesem Zahlenbeispiel 1024 Frequenzrampen.

Das Empfangssignal eines einzelnen Objekts ist nach Mischung und damit auch am A/D-Wandier für jede Frequenzrampe und jeden der vier Empfangskanäle eine sinusförmige Schwingung; dies kann man sich mit Hilfe von Fig. 2 wie folgt erklären: Hat das Objekt die radiale Relativgeschwindigkeit Null zum Radarsystem, so ist die Frequenzdifferenz Δf zwischen gesendetem Signal und empfangenem Signal konstant und dabei proportional zur Signallaufzeit Δt und damit proportional zur radialen Entfernung Δr = c.Δt/2, wobei c die Lichtgeschwindigkeit ist und der Faktor 1/2 berücksichtigt, dass sich die Laufzeit Δt auf das Hin- und Zurücklaufen der Welle bezieht; die Frequenzdifferenz Δf ergibt sich z. B. bei obiger Auslegung zu Δf = 2r/c-187.5MHz/16µs = r-78.125kHz/m. Da das empfangene Signal in jedem Empfangskanal mit der Oszillator- und damit Sendefrequenz gemischt wird, ergibt sich nach dem Mischer jeweils eine sinusförmige Schwingung mit der Frequenz Δf. Diese Frequenz liegt im MHz-Bereich und wird bei einer nichtverschwindenden (radialen) Relativgeschwindigkeit noch um die Dopplerfrequenz verschoben, welche aber nur im kHz-Bereich liegt und deshalb gegenüber dem Frequenzanteil durch die Objektentfemung näherungsweise vernachlässigbar ist. Gibt es mehrere Objekte, so ist das Empfangssignal eine Überlagerung mehrerer sinusförmiger Schwingungen unterschiedlicher Frequenz.

Während jeder Frequenzrampe werden in allen 4 Empfangskanälen die Empfangssignale am A/D-Wandler z.B. 512 mal jeweils im Abstand von z.B. 25ns (also mit 40 MHz) abgetastet (siehe Fig. 2). Wie aus Fig. 2 ersichtlich ist, macht eine Signalabtastung nur in dem Zeitbereich Sinn, wo Empfangssignale von Objekten im interessierenden Entfernungsbereich eintreffen - nach Rampenstart muss also wenigstens die zur maximal interessierenden Entfernung korrespondierende Laufzeit abgewartet werden (bei einer maximalen Entfernung von 200m entspricht dies 1.25µs).

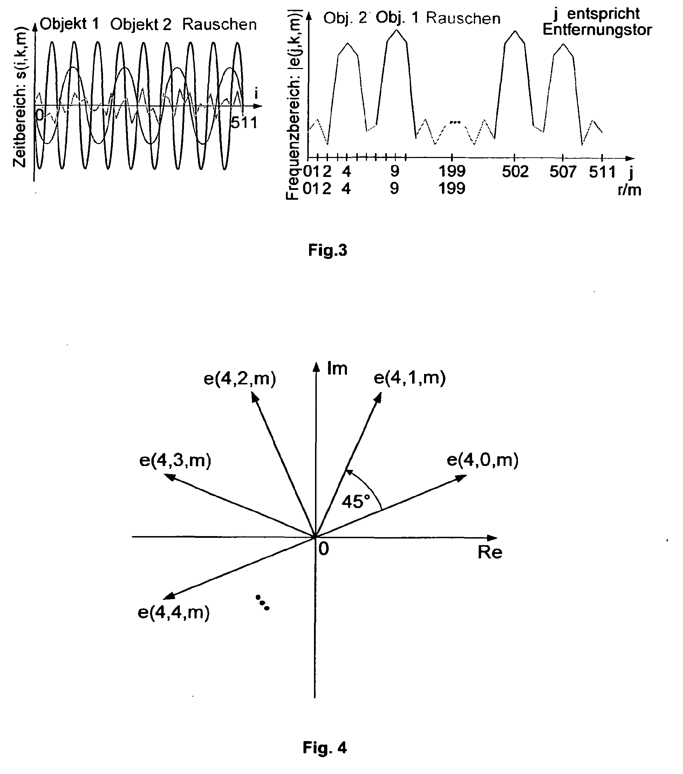

Dann wird über die z.B. 512 Abtastwerte jeder Frequenzrampe und jedes Empfangskanals eine diskrete Fouriertransformation (DFT) in Form einer schnellen Fouriertransformation (FFT = Fast Fourier Transform) gebildet. Dadurch kann man Objekte in unterschiedlichen Entfernungen, welche zu unterschiedlichen Frequenzen führen, trennen (siehe Fig. 3; links Signal vor DFT bei Anwesenheit von zwei Objekten, rechts nach DFT; dabei ist k die Laufvariable über die 1024 Frequenzrampen und m die Laufvariable über die vier Empfangskanäle RXm). Jede der diskreten Frequenzstützstellen j der DFT korrespondiert zu einer Entfernung r und kann deshalb analog zu Pulsradaren auch als Entfemungstor bezeichnet werden; bei obiger Auslegung haben die Entfernungstore gerade einen Abstand und damit eine Breite von einem Meter (ergibt sich aus r·78.125kHz/m = 1/(12.8µs)). In den Entfernungstoren, in welchen sich Objekte befinden, treten in der DFT Leistungsspitzen auf. Da die abgetasteten Empfangssignale reellwertig sind und der obere Übergangsbereich der analogen Bandpassfilter 1.5 eine Frequenzbandbreite von z.B. 8.764MHz hat (entspricht dem Bereich von 112 Frequenzstützstellen), können in diesem Zahlenbeispiel nur 200 der 512 diskreten Frequenzstützstellen weiterverarbeitet werden. Es sei angemerkt, dass beliebig schmale Übergangsbereiche von Filtern nicht realisierbar sind. Die Filter 1.5 dämpfen kleine Frequenzen und somit die Empfangssignale von nahen Objekten, um eine Übersteuerung der Verstärker 1.6 und der A/D-Wandler 1.7 zu vermeiden (die an den Antennen empfangenen Signale werden mit abnehmendem Objektabstand ja stärker).

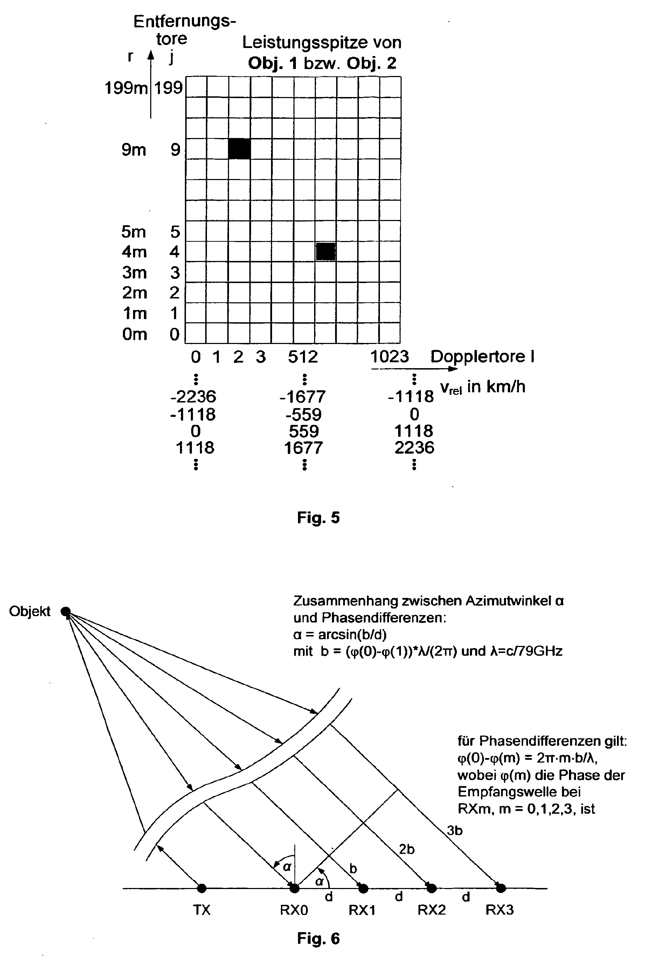

Über die z.B. 1024 Frequenzrampen (k = 0,1,...,1023) fallen in jedem Empfangskanal m (m=0,1,2,3) für jedes Entfernungstor j (also jede der Z.B. 200 betrachteten Frequenzstützstellen) komplexe Spektralwerte e(j,k,m) an. Gibt es in der zu einem Entfemungstor korrespondierenden Entfernung genau ein Objekt, so rotiert der komplexe Spektralwert in diesem Entfernungstor j über die z.B. 1024 Frequenzrampen mit der Dopplerfrequenz, da sich von Frequenzrampe zu Frequenzrampe die Entfernung (im mm-Bereich oder darunter) und damit die Phasenlage der zugehörigen Schwingung gleichförmig ändert. Die beispielhaft in Fig. 4 dargestellte Phasenänderung von 45° pro Frequenzrampe korrespondiert zu einer Entfernungsänderung des Objekts von λ/(8·2) = 0.78mm, wobei die Wellenlänge in diesem Zahlenbeispiel λ = c/24.15GHz = 12.4mm ist und der Faktor 2 im Nenner das Hin- und Zurücklaufen der Wellen berücksichtigt, woraus sich die Relativgeschwindigkeit vᵣₑₗ = 0.78mm/20Ns =140km/h ergibt). Mehrere Objekte mit unterschiedlicher Relativgeschwindigkeit im selben Entfernungstor werden dadurch getrennt, dass für jeden Empfangskanal und jedes Entfernungstor über die in den z.B. 1024 Frequenzrampen anfallenden komplexen Spektralwerte eine zweite DFT gerechnet wird. Jede diskrete Frequenzstützstelle I dieser zweiten DFT korrespondiert zu einem Satz von Dopplerfrequenzen. Wegen der Abtastung der Dopplerfrequenz kann sie nur bis auf ein unbekanntes ganzzahliges Vielfaches ihrer Abstastfrequenz bestimmt werden und somit einem Satz von Relativgeschwindigkeiten vᵣₑₗ von Objekten, so dass die diskreten Frequenzstützstellen der zweiten DFT als Relativgeschwindigkeitstore bezeichnet werden können. Bei der hier betrachteten beispielhaften Auslegung gibt es aus dem Satz möglicher Relativgeschwindigkeiten immer nur eine für den Straßenverkehr sinnvolle bzw. mögliche - siehe Fig. 5. Die zweite DFT dient nicht nur zur Ermittlung der Relativgeschwindigkeit, sondern sie erhöht durch ihre Integration auch die Detektionsempfindlichkeit - bei 1024 Frequenzrampen etwa um 1 0.log₁₀(1024) = 30dB.

Nach dieser zweiten DFT für die Relativgeschwindigkeiten ergibt sich für jeden Empfangskanal ein zweidimensionales komplexwertiges Spektrum, wobei die einzelnen Zellen als Entfemung-Relativgeschwindigkeit-Tore bezeichnet werden können und durch Objekte Leistungsspitzen am jeweils zugehörigen Entfernung-Relativgeschwindigkeit-Tor auftreten (siehe Fig. 5).

Schließlich wird dann noch die Information aus den vier Empfangskanälen (zu den vier Empfangsantennen) fusioniert. Die von der Sendeantenne stammende, an einem einzelnen Objekt reflektierte Welle kommt an den vier Empfangsantennen m, m=0,1,2,3, abhängig vom Azimutwinkel α mit unterschiedlichen Phasenlagen ϕ(m) an, da die Entfernungen zwischen Objekt und Empfangsantennen leicht unterschiedlich sind; wegen der horizontalen Äquidistanz der Empfangsantennen nehmen die Phasenunterschiede über die vier Empfangsantennen linear zu bzw. ab (siehe Fig. 6). Eventuell abgesehen von konstanten und damit kompensierbaren Phasenverschiebungen bleiben diese Phasenunterschiede bis nach der zweiten DFT erhalten, so dass man über die vier Empfangskanäle in jedem Entfernung-Relativgeschwindigkeit-Tor eine digitale Strahlformung durchführen kann. Dazu bildet man Summen über die komplexen Werte der vier Empfangskanäle, welche jeweils mit einem Satz komplexer Faktoren mit linear zunehmender Phase multipliziert werden; abhängig von der linearen Phasenänderung des jeweiligen Faktorensatzes resultieren Strahlungskeulen mit unterschiedlichen Strahlrichtungen. Die Strahlbreite dieser Strahlungskeulen ist deutlich geringer als diejenige der einzelnen Empfangsantennen. Die oben beschrieben Summation wird durch eine z.B. 8-Punkte-DFT realisiert, wobei die vier Werte der vier Empfangskanäle durch vier Nullen ergänzt werden; die diskreten Frequenzwerte dieser DFT korrespondieren zu unterschiedlichen Azimutwinkeln und können deshalb als Winkeltore n (z.B. n=0,1,....7) bezeichnet werden.

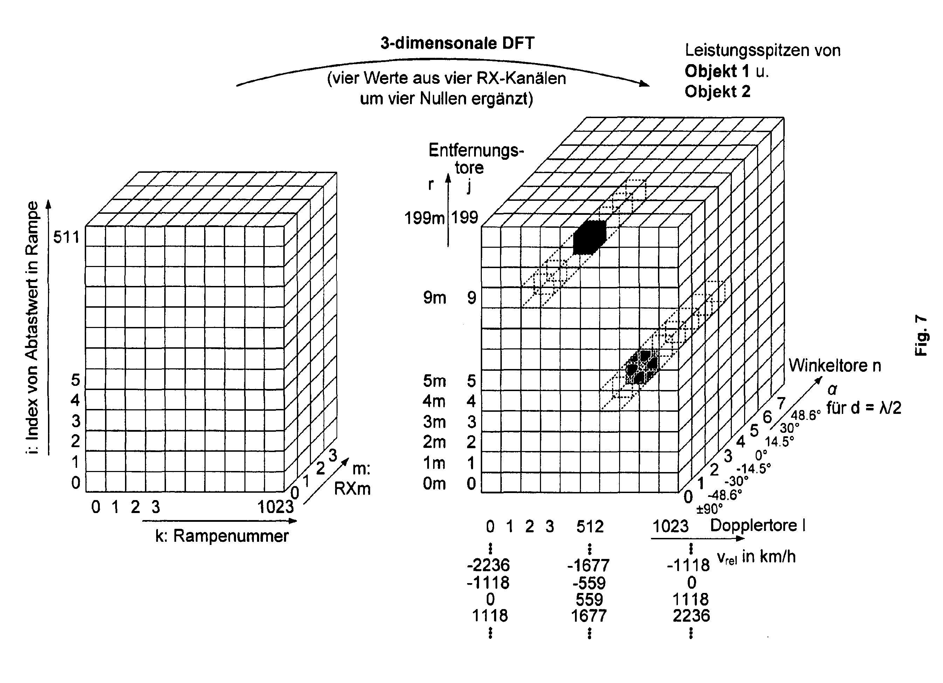

Nach dieser dritten DFT für die Azimutwinkel ergibt sich ein dreidimensionales komplexwertiges Spektrum, wobei die einzelnen Zellen als Entfernung-Relativgeschwindigkeit-Winkel-Tore bezeichnet werden können und durch Objekte Leistungsspitzen am jeweils zugehörigen Entfemung-Relativgeschwindigkeit-Winkel-Tor auftreten. Dies zeigt Fig. 7; links sind Daten vor dreidimensionaler DFT, rechts danach dargestellt. Durch Bestimmung der Leistungsspitzen kann man also Objekte detektieren und ihre Maße Entfernung, Relativgeschwindigkeit (abgesehen von eventuellen Mehrdeutigkeiten, s. o.) und Azimutwinkel ermitteln. Da Leistungsspitzen bedingt durch die DFT-Fensterungen auch in benachbarten Zellen noch Pegel aufweisen, kann man die Objektmaße durch Interpolation in Abhängigkeit dieser Pegel noch wesentlich genauer als die Torbreiten bestimmen. Es sei bemerkt, dass die Fensterfunktionen der drei DFTs so gewählt werden, dass einerseits die Leistungsspitzen nicht zu breit werden, um eine genügende Objekttrennung zu erreichen, aber andererseits auch die Nebenkeulen der Fensterspektren nicht zu hoch werden, um auch schwach reflektierende Objekte in Anwesenheit stark reflektierender Objekte erkennen zu können. Aus der Höhe der Leistungsspitzen kann als viertes Objektmaß noch dessen Reflektionsquerschnitt geschätzt werden, welcher angibt, wie stark das Objekt die Radarwellen reflektiert. Die beschriebene Detektion von Objekten und die Bestimmung der zugehörigen Objektmaße stellen einen Messzyklus dar und liefern ein Momentanbild des Umfeldes; dies wird z.B. etwa alle 30ms zyklisch wiederholt.

In realen Radarsystemen kommt es zu Störeinkopplungen bzw. -einstrahlungen im Radarfrequenzbereich (z.B. 24GHz) oder im Bereich, in welchem der niederfrequente Teil der Auswerteelektronik arbeit bzw. sensitiv ist (z.B. etwa im Bereich 50Hz bis 1GHz). Diese Störungen können durch andere Systeme oder das Radarsystem selbst bewirkt werden; Beispiele dafür sind:
- Einstrahlungen von Radarsystemen, welche im selben Hochfrequenzbereich arbeiten; diese Einstrahlungen dringen über die Empfangsantennen ein,
- von anderen Systemen im niederfrequenten Bereich (z. B. von Funksystemen außerhalb von Fahrzeug oder anderen Systemen im Fahrzeug) bewirkte Einstrahlungen bzw. Einkopplungen, welche über das nicht ideal abgeschirmte Gehäuse oder die fahrzeugseiten Zuleitungen eindringen,
- von Radarsystem selbst bewirkte Störsignale (z. B. Takt von Spannungsreglern), welche in die niederfrequenten Empfangskanäle einkoppeln.

Ohne spezielle Maßnahmen können alle diese Störungen dazu führen, dass vermeintlich Objekte detektiert werden, welche real gar nicht existieren, man spricht hier von Geisterobjekten, was zu fehlerhaften Reaktionen von Fahrerassistenzfunktionen führen kann. Koppelt z. B. der 500kHz-Takt eines Spannungsreglers gleichermaßen in alle 4 Empfangskanäle ein, so ergibt sich im dreidimensionalen Spektrum (nach der dritten DFT) eine Leistungsspitze, welche zu einer Objektdetektion in der Entfernung von gut 6m, beim Azimutwinkel 0° und mit der Relativgeschwindigkeit 0km/h führt. Wird mit dem Radarsystem die Funktion FSRA (Full Speed Range Radar) implementiert, bedeutet dies, dass fälschlicherweise permanent ein mit sehr knappem Abstand vorausfahrendes Fahrzeug gleicher Geschwindigkeit detektiert wird, auf welches das eigene Fahrzeug mit dem Ziel des Erreichens eines genügend großen Abstandes bremst - da Abstand und Relativgeschwindigkeit diese Geisterobjekts aber immer unverändert bleiben (es bremst quasi gleich stark wie das eigene Fahrzeug), führt das zu einer Bremsung fast in den Stillstand, was natürlich nicht akzeptabel ist und auch sicherheitskritisch werden kann.

Um dieses Problem zu vermeiden, wird die Phase des zum Mischen benutzen Oszillatorsignals durch den schaltbaren Invertierer 1.4 von Rampe zu Rampe zufällig um 180° gedreht oder unverändert gelassen; innerhalb jeder Rampe bleibt die gewählte Einstellung des schaltbaren Invertierers jeweils konstant. Dadurch variieren die Phasen der Empfangssignale nach Mischung gleichermaßen - sind also um 180° gedreht oder nicht. Für Frequenzrampen, bei welchen eine Invertierung stattgefunden hat, muss dies später wieder korrigiert werden, z. B. nach der ersten DFT; dazu sind einfach die jeweiligen Werte mit -1 zu multiplizieren (entspricht einer Rückdrehung um 180°). Dann werden die von Reflektionen an Objekten resultierenden Nutzsignale über die drei DFTs wieder kohärent integriert; es ergibt sich dasselbe dreidimensionale Spektrum wie ohne die zufällige Invertierung mit Leistungsspitzen an den entsprechenden Entfernung-Relativgeschwindigkeit-Winkel-Toren.

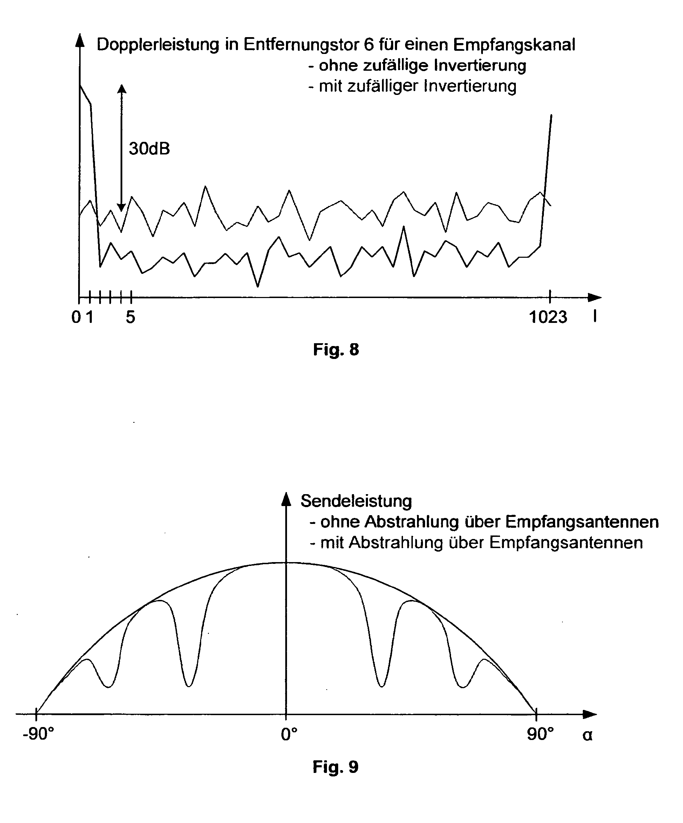

Die Einkopplungen in die niederfrequenten Empfangskanäle z. B. durch einen 500kHz-Takt eines Spannungsreglers sind vor der Korrektur der Phasenvariationen über die Rampen kohärent, werden aber nach der Korrektur durch die von Rampe zu Rampe zufällige Multiplikation mit -1 oder +1 nichtkohärent, so dass sie durch die in der zweiten und dritten DFT stattfindende Integration über die Rampen nicht mehr zu einer Leistungsspitze führen, sondern sich ihre Leistung auf alle diskreten Frequenzstützstellen zufällig verteilt und somit eine weißes Rauschen darstellt; dieses Rauschen tritt im dreidimensionalen Spektrum in allen Zellen des Entfemungstors zu 6m sowie in abgeschwächter Form in den jeweils 1-2 vorausgehenden und nachfolgenden Entfernungstoren auf - in den Zellen anderer Entfernungstore tritt kein erhöhtes Rauschen auf, da die Einkopplungen innerhalb jeder Rampe kohärent wirken und so durch die erste DFT noch nicht in Rauschen umgewandelt werden. Das Rauschen durch die Einkopplungen liegt bei obiger beispielhafter Auslegung (insgesamt 1024 Rampen) etwa 10.log₁₀(1024) ≈ 30dB unter den Leistungsspitzen, welche sie ohne die Phasenvariation erzeugen würden; dieses ist in Fig. 8 für eine starke 500kHz-Einkopplung dargstellt. Würde dieses Rauschen über dem Systemrauschen liegen (wie in Fig. 8 dargestellt), so ergäbe sich eine Empfindlichkeitsreduktion des Radarsystems; durch geeignetes Layout der Schaltung können solch starke Überkopplungen allerdings vermieden werden.

Für die anderen oben erwähnten Störeinkopplungen bzw. -einstrahlungen gilt selbiges Prinzip; durch die zufällige Invertierung führen sie nur zu eventuell erhöhtem Rauschen in wenigen Entfernungstoren (sofern das durch sie erzeugte Rauschen über dem Systemrauschen liegt), aber nicht zu Geisterobjekten.

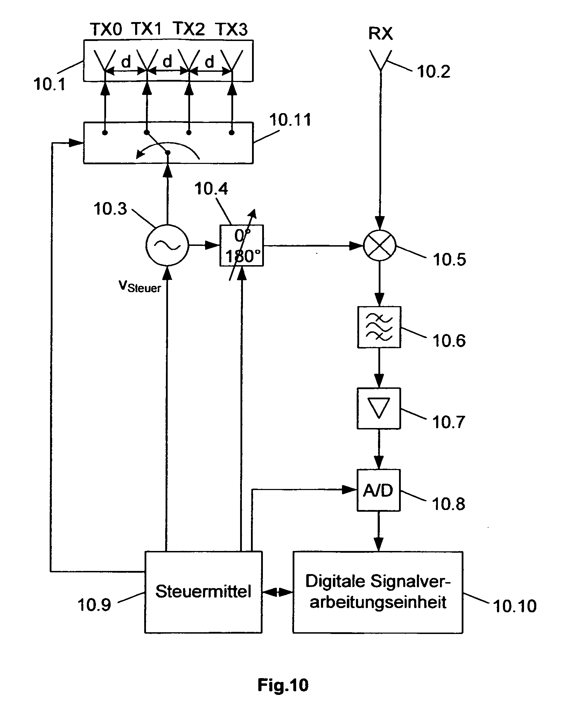

### Ausführung 2 nach Fig. 10

Bisher wurde bei der Ausführung 1 nach Fig. 1 der Idealfall betrachtet, dass nur Leistung über die Sendeantenne 1.1 abgestrahlt wird. Tatsächlich wird aber auch Leistung über die Empfangsantennen 1.2 abgestrahlt, da die Mischer 1.5 nicht ideal isolieren, also ein Teil der vom Oszillator stammenden Eingangsleistung des Mischers durch diesen zu den Empfangsantennen durchleckt und dort abgestrahlt wird.

Für 24GHz-Schmalbandradare, welche im sogenannten ISM-Band arbeiten, ist die vom Oszillator zu den Sendeantennen abgegebene Leistung mindestens gleich groß wie die zu den Mischern abgegebene Leistung; da die Mischer typischerweise eine Isolation von wenigstens 20dB haben, ist die über die Empfangsantennen abgestrahlte Leistung gegenüber der eigentlichen Sendeleistung (aus den Sendeantennen) vernachlässigbar. Für 24GHz-Breitbandradare, sogenannte UWB-Radare, gilt eine sehr restriktiven Frequenzzulassung, welche nur die Abstrahlung einer sehr geringen Sendeleistung erlaubt, was dazu führt, dass die über die eigentlichen Empfangsantennen durch unzureichende Isolation ungewollt abgestrahlte Leistung ähnlich groß ist wie die über die Sendeantennen abgestrahlte Leistung. Dies führt bei der Anordnung nach Fig. 1 dazu, dass es im resultierenden Sendeantennediagramm (welches beide oben erwähnten Leistungsanteile berücksichtigt), zu starken Einbrüchen kommen kann (siehe Fig. 9), was dazu führt, dass in bestimmten Azimutrichtungen das Radarsystem sehr unempfindlich ist, so dass bei diesen Azimutwinkeln zumindest schwach reflektierende Objekte nicht mehr detektiert und damit übersehen werden.

Das nun folgende Ausführungsbeispiel ist ohne weiteres für ein Radarsystem mit einer Mehrzahl von Sendeantennen und zumindest einer Empfangsantenne ausführbar und soll anhand einer Ausführung mit einer Empfangs- und 4 Sendeantennen dargestellt werden.

Deshalb wird nun das in Fig. 10 dargestellte Radarsystem betrachtet. Es unterscheidet sich vom ursprünglichen Radarsystem (Ausführung 1) im Wesentlichen dadurch, dass es nur noch eine einzige Empfangsantenne gibt (statt vier), aber dafür vier äquidistante, in einer Ebene liegende Sendeantennen (statt einer). Die vier Sendeantennen werden über einen Multiplexer 10.11 sequentiell betrieben; in jeder Rampe sendet jeweils nur eine Antenne, wobei von Rampe zu Rampe zur jeweils nächsten Antenne geschaltet wird. Bei insgesamt gleicher Zahl an Rampen (1024) werden bei jeder Sendeantenne 256 Rampen abgestrahlt. Die Signalauswertung besteht weiterhin aus einer dreidimensionalen DFT mit zwei kleinen Unterschieden zu oben: Zum einen hat die zweite DFT nur noch die Länge 256. Zum anderen führt eine nichtverschwindende Relativgeschwindigkeit eines Objekts zu einem linearen Phasenversatz zwischen den Empfangssignalen von den vier sequentiell angesteuerten Sendeantennen; dieser lineare Phasenversatz überlagert sich zu dem linearen Phasenversatz durch den Azimutwinkel des Objekts. Da die Relativgeschwindigkeit ab der zweiten DFT bestimmt ist, kann der durch sie bewirkte Phasenversatz z. B. vor der dritten DFT oder aber auch später herausgerechnet werden.

Das Radarsystem nach Fig. 10 hat bei UWB-Betrieb ohne Phasenvariationen über die Rampen weiterhin den Nachteil, dass es in den Sendeantennediagrammen wegen der ungewollt über die Empfangsantenne abgestrahlten Leistung zu starken Einbrüchen kommt. Dazu kommt noch das Problem, dass diese über die Empfangsantenne abgestrahlte Leistung die Winkelbildung signifikant verfälscht, also zu einer fehlerhaften Messung des Azimutwinkels von Objekten führt; Grund dafür ist folgender: Die von den Sendeantennen abgestrahlte und an einem Objekt reflektierte Leistung führt abhängig vom Azimutwinkel des Objekts im empfangenen Signal zu einem linearen Phasenversatz über die vier Sendeantennen (dies lässt sich analog zu Fig. 6 erklären). Die von der Empfangsantenne abgestrahlte und an einem Objekt reflektierte Leistung hat im Empfangssignal eine von der benutzten Sendeantenne unabhängige Phase. Deshalb besteht das Empfangssignal aus einem Anteil mit linearem Phasenversatz über die Sendeantennen und einem konstanten Anteil, so dass die Summe nicht mehr einen linearen Phasenversatz über die Sendeantennen aufweist und deshalb die auf der Annahme eines linearen Phasenversatzes basierende Azimutwinkelbildung zu Fehlern führt.

Beide oben beschriebenen Probleme (Einbrüche in den Sendeantennendiagrammen und fehlerhafte Azimutwinkelbildung) können wieder dadurch vermieden werden, dass die Phase des zum Mischen benutzen Oszillatorsignals durch den schaltbaren Invertierer 10.4 von Rampe zu Rampe zufällig um 180° gedreht oder unverändert gelassen wird; innerhalb jeder Rampe bleibt die gewählte Einstellung des Invertierers jeweils konstant. Über die Rampen gesehen wird dadurch die über die Empfangsantenne abgestrahlte Leistung unkorreliert und damit nichtkohärent zu der über die Sendeantennen abgestrahlten Leistung. Die über die Empfangsantenne abgestrahlte und an Objekten reflektierte Leistung wirkt sich in den Empfangssignalen wieder nur als geringes Rauschen in den entsprechenden Entfernungstoren aus; dieses Rauschen liegt etwa 10·log₁₀(1024) ≈ 30dB unter der Leistung, welche sich ohne die Phasenvariation (also bei kohärenter Integration durch die zweite und dritte DFT über 1024 Rampen) ergeben würde.

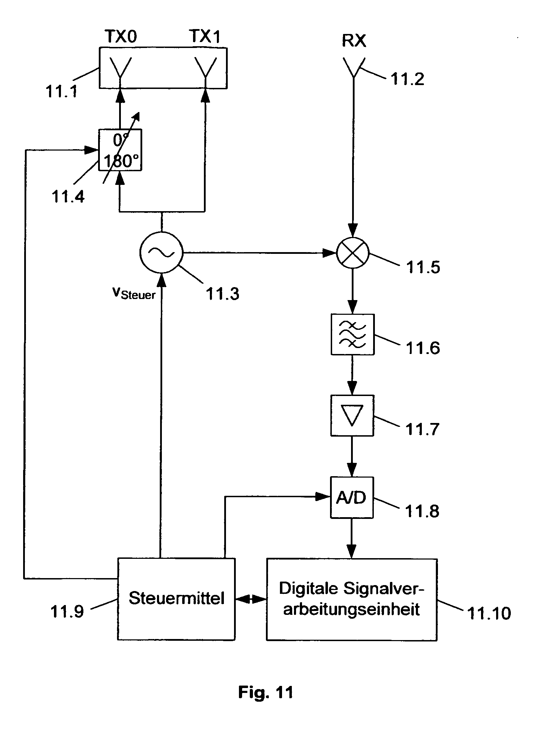

### Ausführung 3 nach Fig. 11

Das nun folgende Ausführungsbeispiel ist ohne weiteres für ein Radarsystem mit einer Mehrzahl von Sendeantennen und zumindest einer Empfangsantenne ausführbar und soll anhand einer Ausführung mit einer Empfangs- und 2 Sendeantennen dargestellt werden.

Nun soll das in Fig. 11 dargestellte einfachere Radarsystem betrachtet werden. Es unterscheidet sich vom vorhergehenden Radsystem nach Ausführung 2 prinzipiell durch folgende Punkte:
- es gibt nur zwei Sendeantennen (statt 4),
- beide Sendeantennen werden gleichzeitig betrieben, also jede der 1024 Rampen wird gleichzeitig auf beiden Antennen ausgesendet (dadurch entfällt der Multiplexer),
- der schaltbare Invertierer 11.4 wird vor einer der beiden Sendeantennen angebracht (anstatt zwischen Oszillator und Mischer).

Durch den schaltbaren Invertierer 11.4 wird die Phase des Signals der ersten Sendeantenne von Rampe zu Rampe alternierend um 0° und 180° variiert - jede zweite Rampe wird das Signal also invertiert, dazwischen bleibt es unverändert; das Signal der zweiten Sendeantenne wird nicht in der Phase variiert. Die alternierende Phase des Signals der ersten Sendeantenne führt dazu, dass die von dieser Sendeantenne herrührenden Empfangssignale über die Rampen mit halber Rampenwiederholfrequenz (also 25kHz) moduliert sind; damit sind sie nach der zweiten DFT in ihrer Dopplerfrequenz auch um 25kHz verschoben. Die von der zweiten Sendeantenne herrührenden Empfangssignale sind im Doppler nicht verschoben. Für ein Objekt, dessen Relativgeschwindigkeit z. B. zu einer Dopplerfrequenz von 5 kHz korrespondiert, ergibt sich nach der zweiten DFT für die Empfangssignale von der zweiten Sendeantenne eine Leistungsspitze bei 5kHz und für die Empfangssignale von der ersten Sendeantenne eine Leistungsspitze bei 30kHz. Damit lassen sich nach der zweiten DFT die Anteile, welche von der ersten und der zweiten Sendeantenne stammen, über die Frequenz trennen. Man kann den Anteil der ersten Sendeantenne um 25kHz zurückverschieben und anschließend die dritte DFT für die Winkelbildung durchführen (hier eine DFT z. B. der Länge 2).

Anstatt der determinierten alternierenden Phasenvariation könnte man sie auch zufällig gestalten. Dann wäre aber die zweite DFT zweimal zu bestimmen, einmal mit und einmal ohne Korrektur der Phasenvariation. In der mit Phasenkorrektur gerechneten DFT würden die von der ersten Sendeantenne herrührenden Empfangssignale zu Leistungsspitzen führen, während die von der zweiten Sendeantenne herrührenden Empfangssignale ein etwa 30dB darunterliegendes Rauschen erzeugen würden; in der ohne Phasenkorrektur gerechneten DFT wären die Verhältnisse gerade vertauscht. Dadurch wäre auch wieder eine Trennung beider Anteile möglich.

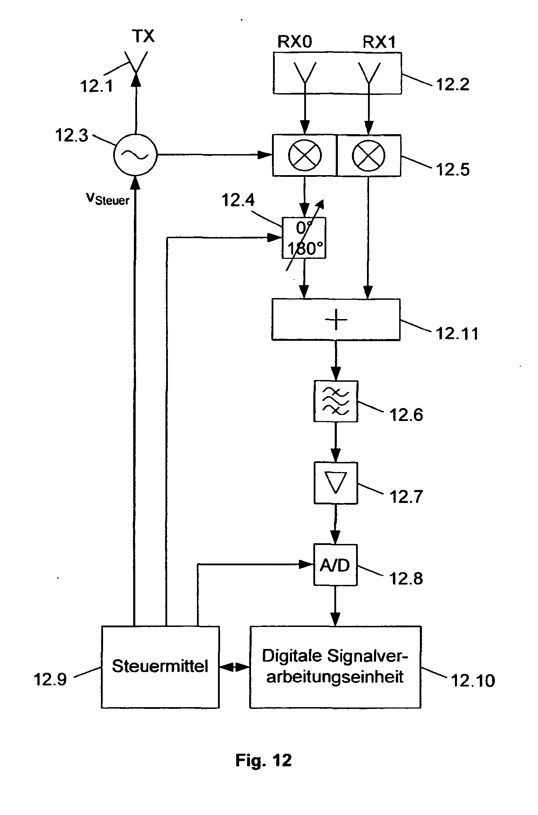

### Ausführung 4 nach Fig. 12

Das nun folgende Ausführungsbeispiel ist ohne weiteres für ein Radarsystem mit zumindest einer Sendeantennen und einer Mehrzahl von Empfangsantennen ausführbar und soll anhand einer Ausführung mit einer Sende- und 2 Empfangsantennen dargestellt werden.

Zuletzt soll das in Fig. 12 dargestellte einfache Radarsystem betrachtet werden. Es unterscheidet sich vom vorhergehenden Radsystem nach Ausführung 2 prinzipiell durch folgende Punkte:
- es gibt nur eine Sendeantennen (statt 2), dafür zwei Empfangsantennen (statt einer),
- die gleichzeitig empfangenen Signale beider Empfangsantennen werden nach dem Mischer im Addierer 12.11 aufsummiert, wobei zuvor das zur ersten Empfangsantenne gehörende Signal den schaltbaren Invertierer 12.4 durchläuft (durch die Summation ist anschließend nur noch ein Empfangskanal nötig).

Durch den schaltbaren Invertierer 12.4 wird nun die Phase des Mischerausgangssignals von der ersten Empfangsantenne von Rampe zu Rampe alternierend um 0° und 180° variiert. Analog zum vorhergehenden Ausführungsbeispiel 3 sind nach der zweiten DFT nun die von der ersten Empfangsantenne herrührenden Signalanteile in der Dopplerfrequenz um die halbe Rampenwiederholfrequenz verschoben und können somit wieder von den unverschobenen Signalanteilen der zweiten Empfangsantenne getrennt werden.

### Abschließende Bemerkungen

Die zufällige Variation der Phasenlage des schaltbaren Invertierers zwischen 0° und 180° wird durch ein rückgekoppeltes binäres Schieberegister der Länge 31 realisiert; ist der Ausgang des Schieberegisters gleich 1, wird invertiert, für 0 nicht. Damit treten die beiden Zustände im Mittel gleich oft auf und aufeinanderfolgende Zustände (also die jeweilige Phasenvariation von Rampe zu Rampe) sind mit sehr guter Näherung unkorreliert, so dass das durch die Phasenvariation bewirkte Rauschen im dreidimensionalen Spektrum mit sehr guter Näherung weiß ist. Da ein Schiebregister nicht einen völlig zufälligen Prozess darstellt (z. B. hat die Ausgangsfolge eine Periode von 2^{L}, wobei L die Länge des Schieberegisters ist) spricht man oft auch genauer von einem pseudozufälligen Prozess.

Reale Objekte sind oft ausgedehnt und nicht jeder Teil des Objekts hat zum Radarsystem dieselbe Relativgeschwindigkeit (insbesondere bei dynamischen Situationen im Nahbereich). Dies führt dazu, dass von einem realen Objekt mehrere Detektionen mit unterschiedlichen Maßen in Entfernung, Azimutwinkel und Relativgeschwindigkeit entstehen können, welche zu unterschiedlichen Teilen des Objekts gehören. Wenn hier also von Objekten die Rede ist, kann es sich dabei auch nur um Teile eines realen Objekts handeln.

Abschließend sei erwähnt, dass sich die obigen Überlegungen natürlich auch auf andere Systemarchitekturen anwenden lassen, z. B. ein System mit zwei Sende- und vier Empfangsantennen.

## Patentansprüche

1. Verfahren zur Unterdrückung von Störstrahlung für ein Radarsystem für ein Kraftfahrzeug, wobei
- in einem Messzyklus ein oder mehrere im Wesentlichen gleicher hochfrequenter Einzelsignale abgestrahlt werden und der zeitliche Abstand dieser Einzelsignale im Mittel größer ist als die zu einer maximal interessierenden Entfernung korrespondierende Laufzeit von empfangenen Signalen, insbesondere zur Bestimmung der Relativgeschwindigkeit von Objekten und zur Erhöhung der Detektionsempfindlichkeit,
- der Frequenzverlauf der abgestrahlten Signale eine oder mehrere Folgen linearer Frequenzrampen jeweils gleicher Steigung beinhaltet und die Variation der Phasenlage jeweils von Rampe zu Rampe stattfindet,
- empfangenen Signale mit Hochfrequenzsignalen gemischt werden, wodurch niederfrequente Empfangssignale entstehen, welche Folgen von Einzelsignalen darstellen
**dadurch gekennzeichnet, dass**
über aufeinanderfolgende niederfrequente Einzelempfangssignale deren Phasenlage dadurch variiert wird, dass die Phasenlage
i) der Einzelsendesignale oder
ii) der zum Mischen benutzten Hochfrequenzsignale oder
iii) der niederfrequenten Einzelempfangssignale selber variiert wird
und die Variation der Phasenlage dazu benutzt wird, dass selbst oder durch andere Systeme bewirkte Störeinkopplungen in einem Bereich, in welchem der niederfrequente Teil einer Auswerteelektronik arbeitet bzw. sensitiv ist, sich bei der Signalverarbeitung gegenüber Empfangssignalen von Objekten unkorreliert verhalten und somit zu einem signifikanten Teil unterdrückt werden können, wobei zur Signalverarbeitung eine Integration über die niederfrequenten Empfangssignale stattfindet, welche korreliert zu den Nutzanteilen und unkorreliert zu den Störanteilen ist, so dass die Störanteile sich nur als Rauschen ausprägen und somit nicht zu falschen Objektdetektionen. oder signifikant fehlerhafter Bestimmung von Objektmaßen führen können.

2. Verfahren nach Anspruch 1, wobei der Amplitudenverlauf der abgestrahlten Signale eine oder mehrere Folgen von kurzen Impulsen beinhaltet und die Variation der Phasenlage jeweils von Impuls zu Impuls stattfindet.

3. Verfahren nach einem der vorherigen Ansprüche, bei welchem die Variation der Phasenlage von den Einzelsendesignalen oder von den zum Mischen benutzte Hochfrequenzsignalen oder der niederfrequenten Einzelempfangssignale in determinierter, pseudozufälliger oder zufälliger Art geschieht oder aus einem determinierten und einem zufälligen oder pseudozufälligen Anteil zusammengesetzt ist.

4. Verfahren nach einem der vorherigen Ansprüche, bei welchem die Variation der Phasenlage dadurch realisiert wird, dass ein Signal wahlweise invertiert, also in der Phase um 180° gedreht oder unverändert gelassen werden kann.

5. Verfahren nach einem der vorhergehenden Ansprüche, wobei bei zeitgleichem Senden und Empfangen mit unterschiedlichen Antennen durch die Variation der Phasenlagen Anteile der zum Mischen benutzten Hochfrequenzsignale, welche durch zum Beispiel nicht ideale Entkopplung oder nicht vollständige Rückwärtsisolation des Empfangspfads über die Empfangsantennen ungewollt ausgesendet werden, von den über die Sendeantennen ausgesendeten Signalen nach Reflektion an Objekten und Empfang in den Signalverarbeitungsmitteln zumindest weitestgehend getrennt werden.

6. Verfahren nach Anspruch 5, bei welchem es mehrere Antennen für Senden und bzw. oder Empfangen gibt und welche in unterschiedlichen Kombinationen parallel oder seriell benutzt werden,
aus den bei unterschiedlichen Kombinationen der Antennen durch Reflektion an Objekten empfangenen Signalen der Winkel dieser Objekte zum Radarsystem bestimmt wird
und durch die Variation der Phasenlage Fehler in der Winkelbestimmung zumindest weitestgehend vermieden werden.

7. Verfahren nach Anspruch5, bei welchem die Variation der Phasenlage derart ausgestaltet ist, dass es durch Überlagerung der über Sende- und Empfangsantennen abgestrahlten Leistung nicht zu Winkelbereichen mit signifikant reduzierter Detektionsempfindlichkeit kommt.

8. Verfahren nach einem der vorherigen Ansprüche, bei welchem auf mehreren Antennen gleichzeitig gesendet wird, wobei die relative Phasenlage der Einzelsendesignale verschiedener Antennen zueinander variiert wird, wodurch die Sendesignale verschiedener Antennen bei Empfang auf derselben Antenne zumindest näherungsweise getrennt werden können.

9. Verfahren nach Anspruch8, wobei gleichzeitig auf zwei Antennen gesendet wird und die relative Phasenlage der Einzelsendesignale beider Antennen zueinander zufällig bzw. pseudozufällig oder von Einzelsendesignal zu Einzelsendesignal alternierend um 0° und 180° variiert wird.

10. Verfahren nach einem der vorherigen Ansprüche, bei welchem auf mehreren Antennen gleichzeitig empfangen wird, wobei deren Empfangssignale im Hoch- oder Niederfrequenzbereich addiert werden und bei der Addition die relative Phasenlage der Einzelempfangssignale verschiedener Antennen zueinander variiert wird, wodurch die Empfangssignale verschiedener Antennen später in den Signalverarbeitungsmitteln zumindest näherungsweise wieder getrennt werden können, so dass ein Teil der Prozessierung der Empfangssignale in einem gemeinsamen Pfad geschehen kann.

11. Verfahren nach einem der vorherigen Ansprüche, bei welchem vor, bei oder nach Auswertung jeweils eines Einzelempfangssignals die dabei benutzte Phasenlagenvariation korrigiert wird.

12. Radarsystem zur Umfelderfassung für ein Kraftfahrzeug, das mittels eines Verfahrens nach einem der vorherigen Ansprüche Auswirkungen von Störstrahlung unterdrückt, umfassend
- Sendemittel zur Abstrahlung von Sendesignalen, wobei die Sendemittel mehrere Antennen beinhalten können, und derart ausgestaltet sind, dass der Frequenzverlauf der abgestrahlten Signale eine oder mehrere Folgen linearer Frequenzrampen jeweils gleicher Steigung beinhaltet Empfangsmittel zum Empfang von an Objekten reflektierten Sendesignalen, wobei die Empfangsmittel mehrere Antennen beinhalten können, und
- Signalverarbeitungsmittel zur Prozessierung der empfangenen Signale und in einem Messzyklus eine oder mehrere Folgen im Wesentlichen gleicher hochfrequenter Einzelsignale abgestrahlt werden und der zeitliche Abstand dieser Einzelsignale im Mittel größer ist als die zu einer maximal interessierenden Entfernung korrespondierende Laufzeit von empfangenen Signalen, insbesondere zur Bestimmung der Relativgeschwindigkeit von Objekten und zur Erhöhung der Detektionsempfindlichkeit
- empfangenen Signale mit Hochfrequenzsignalen gemischt werden, wodurch niederfrequente Empfangssignale entstehen, welche Folgen von Einzelsignalen darstellen,
**dadurch gekennzeichnet, dass**
zudem Mittel zur Phasendrehung von Einzelsignalen vorgesehen sind und über aufeinanderfolgende niederfrequente Einzelempfangssignale deren Phasenlage dadurch variiert wird, dass mit den Mitteln zur Phasendrehung die Phasenlage
i) der Einzelsendesignale oder
ii) der zum Mischen benutzten Hochfrequenzsignale oder
iii) der niederfrequenten Einzelempfangssignale selber variiert wird
wobei die Variation der Phasenlage jeweils von Rampe zu Rampe stattfindet und Auswertemittel zur Analyse der niederfrequenten Signale vorgesehen sind und die Auswertemittel ein Speichermedium umfassen, auf dem ein Verfahren nach einem der vorherigen Ansprüche hinterlegt ist.

## Claims

1. A method for the suppression of interfering radiation for a radar system for a motor vehicle, wherein
- in one measurement cycle, one or more substantially identical high-frequency single signals are radiated and the time interval between these single signals is greater on average than the propagation time of received signals corresponding to a maximum distance of interest, in particular for determining the relative velocity of objects and for increasing the detection sensitivity,
- the frequency response curve of the radiated signals includes one or more sequences of linear frequency ramps with identical slope each and the variation of the phase position occurs from ramp to ramp in each case,
- received signals are mixed with high-frequency signals, thus creating low-frequency receive signals representing sequences of single signals
**characterized in that**
via successive low-frequency single receive signals the phase position of said signals is varied by varying the phase position of
i) the single transmit signals or
ii) the high-frequency signals used for mixing or
iii) the low-frequency single transmit signals themselves
and the variation of the phase position is used such that interferences, caused by the system itself or by other systems in a region where the low-frequency part of an analysis electronics operates or is sensitive, behave in an uncorrelated manner with respect to receive signals from objects in signal processing and thus can be suppressed to a significant extent, wherein for signal processing an integration is performed over the low-frequency receive signals, said integration being correlated to the useful components and uncorrelated to the interfering components such that the interfering components are present only in the form of noise and thus cannot lead to incorrect detections of objects or a significantly incorrect determination of the dimensions of objects.

2. The method according to claim 1, wherein the amplitude response of the radiated signals includes one or more sequences of short pulses and the variation of the phase position occurs from pulse to pulse each time.

3. The method according to any one of the preceding claims, wherein the variation of the phase position of the single transmit signals or of the high-frequency signals used for mixing or the low-frequency single receive signals occurs in a deterministic, pseudo-random or random manner or is composed of a deterministic and a random or pseudo-random component.

4. The method according to any one of the preceding claims, wherein the variation of the phase position is realized by being able to optionally invert a signal, i.e. rotate it in phase by 180°, or leave it unchanged.

5. The method according to any one of the preceding claims, wherein in the case of simultaneous transmission and reception with different antennas, components of the high-frequency signals used for mixing, which are radiated unintentionally via the receiving antennas by e.g. non-ideal decoupling or incomplete reverse isolation of the reception path, are separated, due to the variation of the phase positions, at least to a large extent from the signals radiated via the transmission antennas following the reflection on objects and the reception in the signal processing means.

6. The method according to claim 5, wherein there are multiple antennas for transmission and/or reception and said antennas are used in different combinations in parallel or in series, from the signals received by reflection on objects at different combinations of the antennas, the angle of said objects with respect to the radar system is determined and by the variation of the phase position errors in the determination of the angle are avoided at least to a large extent.

7. The method according claim 5, wherein the variation of the phase position is realized such that angular ranges are avoided having a significantly reduced detection sensitivity due to the superposition of the power radiated via transmitting and receiving antennas.

8. The method according to any one of the preceding claims, wherein transmission occurs simultaneously on multiple antennas, wherein the relative phase position of the single transmit signals of different antennas relative to one another is varied, thus being able to separate at least approximately the transmission signals of different antennas when receiving on the same antenna.

9. The method according to claim 8, wherein transmission occurs simultaneously on two antennas and the relative phase position of the single transmit signals of both antennas relative to one another is varied randomly or pseudo-randomly or in a manner alternating from one single transmit signal to the other by 0 ° and 180°.

10. The method according to any one of the preceding claims, wherein reception occurs simultaneously on multiple antennas, the reception signals of said antennas in the high-frequency or low-frequency range being added up and the relative phase position of the single receive signals of different antennas relative to one another being varied while performing the addition, thus being able to separate the receive signals of different antennas in the signal processing means at least approximately at a later point, such that part of the processing of the receive signals can occur in a common path.

11. The method according to any one of the preceding claims, wherein prior to, during or after the analysis of one single receive signal at a time the phase position variation used therefore is corrected.

12. A radar system for surroundings detection for a motor vehicle, which, by means of a method according to any one of the preceding claims, suppresses the effects of interfering radiation, comprising
- transmitting means for radiating transmit signals, wherein the transmitting means can include multiple antennas and are realized such that the frequency response curve of the radiated signals includes one or more sequences of linear frequency ramps with identical slope each
- receiving means for receiving transmit signals reflected on objects, wherein the receiving means can include multiple antennas, and
- signal processing means for processing the received signals and
in one measurement cycle, one or more sequences of substantially identical high-frequency single signals are radiated and the time interval between these single signals is greater on average than the propagation time of received signals corresponding to a maximum distance of interest, in particular for determining the relative velocity of objects and for increasing the detection sensitivity
- received signals are mixed with high-frequency signals, thus creating low-frequency receive signals representing sequences of single signals,
**characterized in that**
in addition, means for the phase rotation of single signals are provided and via successive low-frequency single receive signals, the phase position of said signals is varied by varying, with the means for phase rotation, the phase position of
i) the single transmit signals or
ii) the high-frequency signals used for mixing or
iii) the low-frequency single transmit signals themselves
wherein the variation of the phase position occurs from ramp to ramp in each case and analysis means for analyzing the low-frequency signals are provided and the analysis means comprise a storage medium whereon a method according to any one of the preceding claims is stored.

## Revendications

1. Procédé de suppression du rayonnement parasite pour un système radar destiné à un véhicule automobile,
- un ou plusieurs signaux individuels ayant une haute fréquence essentiellement identique étant rayonnés dans un cycle de mesure, et l'intervalle de temps de ces signaux individuels étant en moyenne supérieur au temps de parcours de signaux reçus qui correspond à une distance intéressante maximale, en particulier pour la détermination de la vitesse relative d'objets et pour l'augmentation de la sensibilité de détection,
- la courbe de fréquence des signaux rayonnés contenant une ou plusieurs séquences de rampes de fréquence linéaires ayant respectivement la même pente et la variation de la position de phase s'effectuant respectivement d'une rampe à l'autre,
- les signaux reçus étant mélangés avec des signaux haute fréquence, ce qui suscite des signaux de réception basse fréquence qui représentent des séquences de signaux individuels,
**caractérisé en ce que**
par le biais de signaux de réception individuels basse fréquence qui se succèdent, leur position de phase est modifiée par le fait que la position de phase
i) des signaux d'émission individuels ou
ii) des signaux haute fréquence utilisés pour le mélangeage ou
iii) des signaux de réception individuels basse fréquence eux-mêmes est modifiée
et la variation de la position de phase est utilisée pour que des couplages parasites autoproduits ou produits par d'autres systèmes se comportent, dans une plage dans laquelle la partie basse fréquence d'une électronique d'analyse fonctionne ou est sensible, de façon non corrélée lors du traitement des signaux par rapport à des signaux de réception d'objets et puissent ainsi être supprimées pour une part significative, une intégration intervenant, pour le traitement des signaux, par le biais des signaux de réception basse fréquence, intégration qui est corrélée avec les fractions utiles ou qui est non corrélée avec les fractions parasites, de telle sorte que les fractions parasites ne se manifestent que comme bruit et ne peuvent dont pas conduire à de fausses détections d'objet ni à une détermination significativement erronée de dimensions d'objets.

2. Procédé selon la revendication 1, la courbe d'amplitude des signaux rayonnés contenant une ou plusieurs séquences de brèves impulsions et la variation de la position de phase s'effectuant respectivement d'une impulsion à l'autre.

3. Procédé selon une des revendications précédentes, dans lequel la variation de la position de phase des signaux d'émission individuels ou des signaux haute fréquence utilisés pour le mélangeage ou des signaux de réception individuels basse fréquence s'effectue de façon déterminée, pseudo-aléatoire ou aléatoire, ou se compose d'une fraction déterminée et d'une fraction aléatoire ou pseudo-aléatoire.

4. Procédé selon une des revendications précédentes, dans lequel la variation de la position de phase est réalisée par le fait qu'un signal peut être inversé au choix, c'est-à-dire peut être tourné de 180° dans la phase ou bien peut être laissé inchangé.

5. Procédé selon une des revendications précédentes, dans lequel, lors d'une émission et d'une réception simultanées avec différentes antennes par la variation des positions de phase, des fractions des signaux haute fréquence qui sont utilisés pour le mélangeage et qui sont émis de façon involontaire par le biais des antennes de réception, par exemple par un découplage non idéal ou par une isolation inverse incomplète du trajet de réception, sont séparées, au moins largement, des signaux émis par le biais des antennes d'émission après réflexion sur des objets et après réception dans les moyens de traitement des signaux.

6. Procédé selon la revendication 5, dans lequel il y a plusieurs antennes pour l'émission et respectivement ou pour la réception, et ces antennes sont utilisées en parallèle ou en série dans différentes combinaisons,
et l'angle de ces objets par rapport au système de radar est défini à partir des signaux reçus pour différentes combinaisons des antennes par la réflexion sur des objets,
des erreurs dans la définition angulaire sont évitées au moins dans une large mesure par la variation de la position de phase.

7. Procédé selon la revendication 5, dans lequel la variation de la position de phase est configurée de telle sorte qu'on ne constate pas de plages angulaires ayant une sensibilité de détection significativement réduite par la superposition de la puissance rayonnée par le biais des antennes d'émission et de réception.

8. Procédé selon une des revendications précédentes, dans lequel l'émission s'effectue de façon simultanée sur plusieurs antennes, la position de phase relative des signaux d'émission individuels de différentes antennes étant modifiée les uns par rapport aux autres, ce qui fait que les signaux d'émission de différentes antennes peuvent être séparés au moins approximativement lors de la réception sur la même antenne.

9. Procédé selon la revendication 8, l'émission s'effectuant simultanément sur deux antennes, et la position de phase relative des signaux d'émission individuels des deux antennes étant modifiée l'une par rapport à l'autre de façon aléatoire ou respectivement de façon pseudo-aléatoire ou bien étant modifiée de façon alternée de 0° et 180° d'un signal d'émission individuel à l'autre.

10. Procédé selon une des revendications précédentes, dans lequel la réception s'effectue sur plusieurs antennes simultanément, leurs signaux de réception dans la plage haute fréquence ou dans la plage basse fréquence étant additionnés et, lors de l'addition, la position de phase relative des signaux de réception individuels de différentes antennes étant modifiée les uns par rapport aux autres, ce qui fait que les signaux de réception de différentes antennes peuvent être ultérieurement séparés de nouveau au moins approximativement dans les moyens de traitement des signaux, de telle sorte qu'une partie du traitement des signaux de réception peut être effectuée dans un trajet commun.

11. Procédé selon une des revendications précédentes, dans lequel, avant, pendant ou après l'analyse respectivement d'un signal de réception individuel, la variation de position de phase utilisée à cette occasion est corrigée.

12. Système radar pour la détection de l'environnement pour un véhicule automobile, qui supprime les répercussions du rayonnement parasite au moyen d'un procédé selon une des revendications précédentes, comprenant
- des moyens d'émission pour le rayonnement de signaux d'émission, les moyens d'émission pouvant contenir plusieurs antennes et étant constitués de telle sorte que la courbe de fréquence des signaux rayonnés contient une ou plusieurs séquences de rampes de fréquence linéaires respectivement de même pente, des moyens de réception pour la réception de signaux d'émission réfléchis sur les objets, les moyens de réception pouvant contenir plusieurs antennes, et
- des moyens de traitement des signaux pour le traitement des signaux reçus, et une ou plusieurs séquences de signaux individuels ayant une haute fréquence essentiellement identique sont rayonnées dans un cycle de mesure, et l'intervalle temporel de ces signaux individuels est en moyenne supérieur au temps de parcours qui correspond à une distance intéressante maximale, en particulier pour la détermination de la vitesse relative d'objets et pour l'augmentation de la sensibilité de détection,
- les signaux reçus sont mélangés avec des signaux haute fréquence, ce qui suscite des signaux de réception basse fréquence qui représentent des séquences de signaux individuels,
**caractérisé en ce que**,
en outre, des moyens de rotation de phase de signaux individuels sont prévus et **en ce que**, par le biais de signaux de réception individuels basse fréquence qui se succèdent, leur position de phase est modifiée par le fait que la position de phase
i) des signaux d'émission individuels ou
ii) des signaux haute fréquence utilisés pour le mélangeage ou
iii) des signaux de réception individuels basse fréquence eux-mêmes est modifiée avec les moyens de rotation de phase,
la variation de la position de phase s'effectuant respectivement d'une rampe à l'autre, et des moyens d'analyse étant prévus pour l'analyse des signaux basse fréquence, et les moyens d'analyse comprennent un support d'enregistrement sur lequel est enregistré un procédé selon une des revendications précédentes.
